# EUROPEAN PATENT APPLICATION

(11) **EP 0 650 028 A2**
(43) Date of publication of application: **26.04.1995**
(21) Application number: 94103923.2
(22) Date of filing: 14.03.1994
(51) Int. Cl.: G01B 7/06

(54) **Method and apparatus for measurement of thickness of specimens**

(30) Priority: 22.10.1993 US 142171
(71) Applicant: MAGNETIC ANALYSIS CORPORATION, Mount Vernon, N.Y. 10550 (US)
(72) Inventor: You, Zhongqing, Port Chester, NY 10573 (US); Brooks, Robert A., White Plains, NY 10606 (US); Bebick, Paul J., Bronx, YN 10469 (US)
(74) Representative: Lehn, Werner, Dipl.-Ing.

(57) **Abstract**

A thickness measurement of a specimen is obtained by applying a DC magnetic field to the specimen of level placing at least a portion of the specimen in a near magnetically saturated state and determining the incremental magnetic permeability at the surface of the portion of the specimen and deriving therefrom the thickness of the portion of the specimen. The determining step of the method is preferably practiced in part by inducing and detecting eddy currents in a surface of the specimen bounding the portion. Systems and apparatus for implementing the method are set forth.

## Description

### Field of the Invention

This invention relates generally to the non-destructive examination of objects and pertains more particularly to methods and apparatus for obtaining thickness measurements of objects responsive to the influence of magnetic fields.

### Background of the Invention

In the prior art, plate or wall thickness is measured non-destructively by the use of ultrasonic techniques which fall into two categories. One technique is generally referred to as the pulse-echo method, wherein a water or oil based couplant transmits a sound wave generated by a transducer to the object. The other technique, referred to as the EMAT (electro-magnetic acoustic transducer) method, involves a strong, near-saturation level DC (direct current) magnetic field acting as a couplant for the sound wave.

The pulse-echo method is more suited to a statistical sampling or secondary verification approach especially on large plates in above the ground oil-storage tanks having numerous tank bottom plates. The EMAT method is more suitable to periodic wall thickness measurements of critical end-use tubing for oil wells, power plants and like applications.

Although ultrasonic techniques for thickness measurements are generally easy to use and considered to be highly accurate on non-corroded, newly-produced products, they can be much more difficult to implement, as well as erroneous in output at times, when used on corroded products such as aged tank bottom plates. Such difficulties and errors can be caused by loss of coupling due to delaminated surface scale and/or poorly adhering epoxy laminate coatings. They can also be caused by excessive beam diffraction and uncontrolled beam reflections or deflections due to corrosion caused by non-parallel opposing plate sides.

### Summary of The Invention

The present invention has as its primary object the provision of improved methods and apparatus for thickness measurement of specimens to be non-destructively tested.

A more particular object of the invention is to provide specimen thickness measuring methods and apparatus which overcome the above-noted disadvantages of prior art ultrasonic thickness measuring practices and systems.

In attaining the foregoing and other objects, the invention provides, in its broad method aspect, practice wherein applicants obtain a thickness measurement of a specimen by applying a DC magnetic field to the specimen of level placing at least a portion of the specimen in a near magnetically saturated state and determining the incremental magnetic permeability of the portion of the specimen and deriving therefrom the thickness of the portion of the specimen.

The determining step of the method is preferably practiced in part by inducing and detecting changes in eddy currents in a near surface of the specimen bounding the portion.

While applicants envision the method as self-standing, i.e., for the sole purpose of thickness determination, they further see the method as employed concurrently with other specimen evaluations, such as flux leakage evaluation. In such concurrent, different specimen evaluation, applicants realize the practice of the DC magnetization step derivatively from flux leakage evaluation apparatus.

While objective thickness determination is applicants' primary goal, they look also to systems wherein a specimen is to be evaluated only for intolerable thickness variation along lengths thereof. Here, applicants provide for output indication only where such intolerable thickness variation exists along the specimen length (or perimeter).

The premise of the invention, in subjecting a specimen to a DC magnetic field of magnitude causing a specimen under examination for thickness variation to be in a near magnetically saturated state commensurate with detection of an expected thickness variation in the specimen, is that thickness measurement is attainable by detection of incremental magnetic permeability variation in the specimen, as detected at a single bounding surface thereof. Thus, such detection of incremental magnetic permeability variation identifies thickness variation.

In a preferred implementation of the method, applicants dispose in juxtaposition with one surface of the specimen eddy current inducing and detection apparatus at a portion of the specimen placed in such near magnetically saturated state and derive from detected eddy currents indication of object thickness and display object thickness.

The foregoing and other objects and features of the invention will be further understood from the following detailed discussion of preferred practices and embodiments thereof and from the drawings wherein like reference numerals identify like components and parts throughout.

### Description of the Drawings

Fig. 1 is a general block diagram of a system in accordance with the invention.

Fig. 1a is a plan view depicting the invention as incorporated into a leakage flux inspection system.

Fig. 2 is a showing of graphs plotting flux density and permeability separately against magnetic field strength.

Fig. 3 is a particularly preferred embodiment of the eddy current unit of the Fig. 1 system provided jointly with a flux probe of a flux leakage system.

Fig. 4 shows the Fig. 3 eddy current unit in association with apparatus which can constitute the magnetic field generator of the Fig. 1 system and also shows a specimen to be evaluated.

Fig. 5 is a detailed block diagram of the drive and processing circuitry of the Fig. 1 system.

### Detailed Description of Preferred Embodiments and Practices

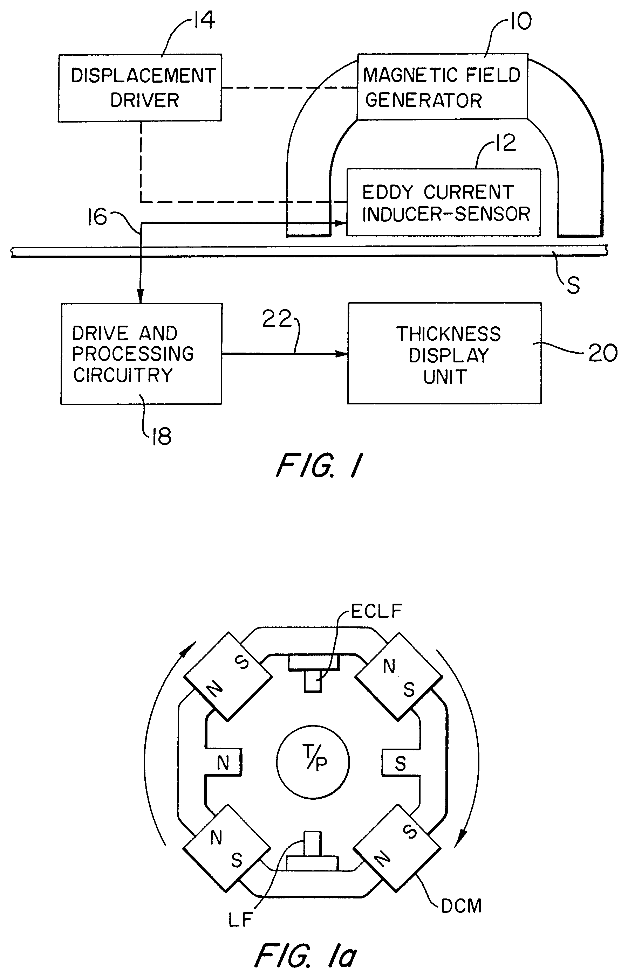

Referring to Fig. 1, the system thereof includes a magnetic field generator 10 which induces a magnetic field in a specimen S, typically, carbon steel plate, whose thickness is to be monitored. An eddy current unit 12 (inducer-sensor) is disposed in operative relation with the specimen at one surface thereof. Displacement driver 14 rotates magnetic field generator 10 and eddy current unit 12 in unison over the surface of the specimen.

Eddy current unit 12 is connected by lines 16 to drive and processing circuitry 18, which functions to excite the eddy current unit coils and to derive therefrom output signals, which contain information concerning incremental magnetic permeability variations in the specimen and hence related thickness variation of the specimen in the course of displacement of the eddy current unit to different locations. Output signals of drive and processing circuitry 18 are conveyed to thickness display unit 20 over lines 22.

Fig. 1a depicts the eddy current thickness sensor's incorporation into an existing leakage flux inspection system for tubular ferromagnetic products. The DC magnet coils DCM provide near magnetic saturation flux levels in the tubing/pipe T/P necessary for both systems to properly operate. In this case, the magnet and sensors assembly is rotated while product is longitudinally fed through the arrangement, circumferentially describing a barber-pole like helix of inspection and wall thickness monitoring. ECLF identifies a composite sensor including both eddy current and leakage flux components whereas LF indicates only leakage flux sensing components.

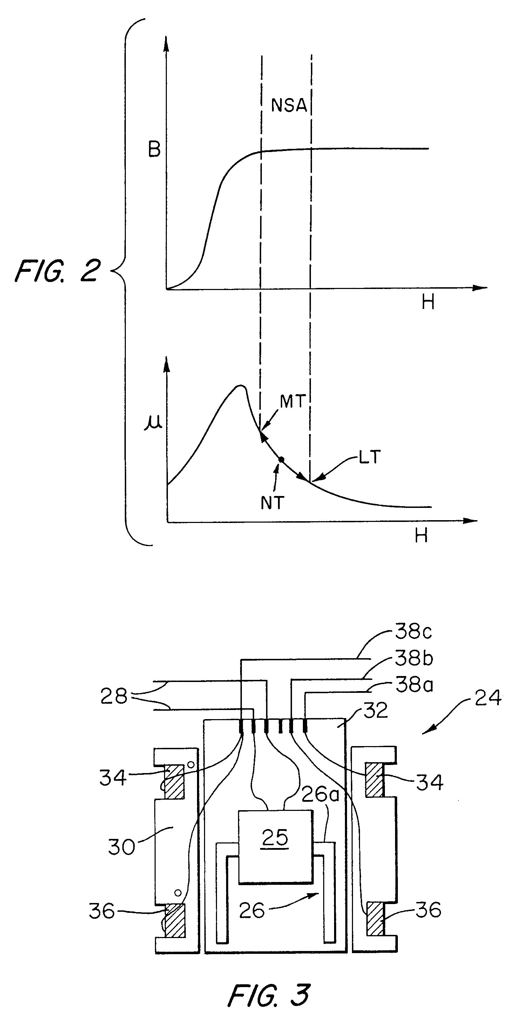

Turning to Fig. 2, the upper graph shows the variation of magnetic flux density (B) with magnetic field strength (H). As is seen, saturation occurs at high field strength, where there is equal change in flux density with increase in field strength, i.e., the ratio thereof, which defines magnetic permeability, is unity. Applicants define an operating range for the subject invention to be as indicated in a nearly saturated area NSA, where in the upper graph flux density changes substantially linearly with increases or decreases in field strength.

The lower graph of Fig. 2 shows incremental magnetic permeability (u) to increase sharply at the left hand portion corresponding with the rise of flux density to the knee of the upper graph and to decrease thereafter as flux density changes lesser with field increase. An essentially linear change in permeability is observed in applicants' selected range of operation, nearly saturated area NSA. A specimen nominal thickness NT is placed within NSA, such that thickness variations to some maximum thickness MT and to some least thickness LT can be measured.

In accordance with the invention, a sufficiently high test frequency is selected such that only the surface of the specimen with which eddy current unit 12 is juxtaposed, is sensed. The permeability of the surface is the most influential parameter affecting the impedance of coils of eddy current unit 12 primarily due to changes in coil inductance.

The level of flux density in the specimen established by the DC magnetization field applied for a nominal thickness is such that some near-saturated value of permeability is achieved. When specimen thickness increases, the flux density in the remaining thickness decreases almost linearly away from saturation and results in a nearly linear relative increase in the specimen's permeability. conversely, when specimen thickness decreases, the flux density in the remaining thickness increases almost linearly toward saturation and results in a nearly linear relative decrease in the specimen's permeability.

As is discussed in more detail below, drive and processing circuitry 18 drives the coils of eddy current unit 12 to induce eddy currents in the specimen, monitors the corresponding variations in the output signals of eddy current unit 12 and suitably scales the same to provide the desired showing in thickness display unit 20.

The level of flux density required for the subject thickness measuring system is also identical to the levels of flux density required for known flux leakage systems. Accordingly, in a particularly preferred embodiment of the invention, the eddy current unit for thickness measurement is provided jointly with the flux probe of the flux leakage system, as shown in Fig.1a, specifically for tubular products.

Composite sensor 24 of Fig. 3 thus includes centrally thereof a flux leakage probe having flux leakage coil 25, disposed about the center course 26a of flux coupling member 26, which has leg courses extending to the sensing face of composite sensor 24. The flux leakage output signals of coil 25 are provided to associated flux leakage processing circuitry over lines 28. A bobbin 30 is disposed about casing 32 of the flux leakage probe and has coils 34 and 36 of a thickness measurement eddy current unit wound thereon. Coils 34 and 36 are differentially connected and the junction of the coils and free ends are connected to lines 38a-38c, which correspond to lines 16 of Fig. 1 and both receive coil drive and provide the output of the thickness measurement eddy current unit.

A thickness measurement eddy current unit in accordance with the invention may of course be configured independently of a flux leakage probe as desired.

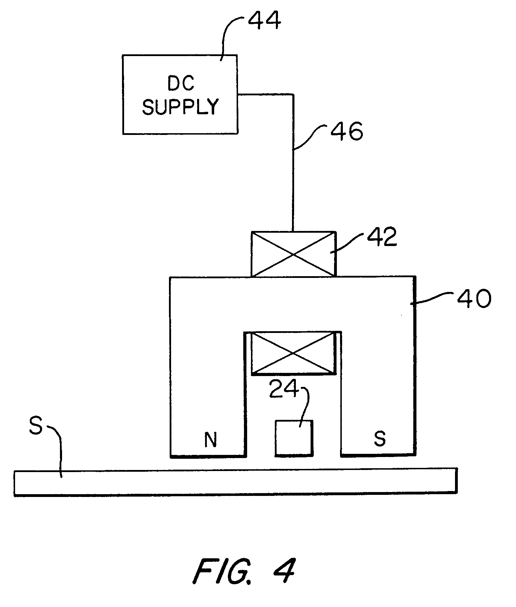

Turning to Fig. 4, composite sensor 24 of Fig. 3 is shown in juxtaposition with specimen S and interiorly of the legs of yoke magnet 40 having indicated poles N (north) and S (south). Yoke magnet 40 has coil 42 about its central course and the coil is driven by DC power supply 44 over lines 46, which corresponds to magnetic field generator 10 of Fig. 1.

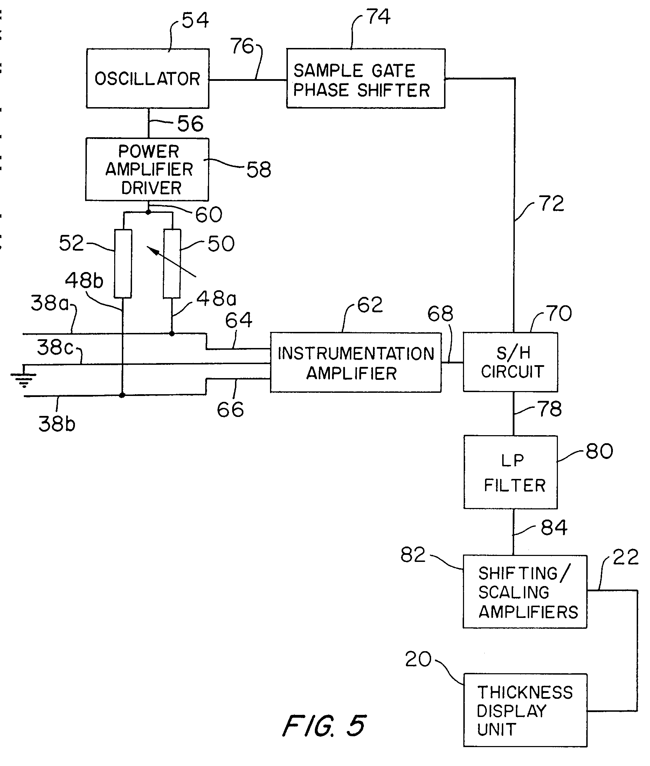

Fig. 5 depicts a particularized embodiment of drive and processing circuitry 18 of Fig. 1. Input line 38c is the line connected to the junction of the coils of the thickness measurement eddy current unit of Fig. 3 and is connected to ground. Input lines 38a and 38b are lines connected to the free ends of the coils of the thickness measurement eddy current unit and are connected, for sensor drive and balancing purposes over lines 48a and 48b to bridge resistors 50 and 52. The coils, with such connections, form with resistors 50 and 52 a bridge circuit and balancing resistor 50 is adjusted to provide a null condition on lines 38a and 38b.

Oscillator 54 generates a high frequency signal, e.g., ten kilohertz, and applies the same over lines 56 to power amplifier driver 58, which is in turn connected over line 60 to the junction of resistors 50 and 52 for driving the coils of the thickness measurement eddy current unit.

Input lines 38a and 38b are also connected over lines 64 and 66 to instrumentation amplifier 62 which provides output indication on lines 68 of differences between the signals on lines 38a and 38b. The difference indication is stored in sample and hold (S/H) circuit 70.

Sample and hold circuit 70 is gated for sampling timing by a signal input thereto on line 72, which is derived from sample gate phase shifter 74. Phase shifter 74 is frequency locked to oscillator 54 by input thereto on line 76 and functions to provide a sampling signal on line 72 which is phase-shifted to accommodate phase change as between the driving of the coils of the thickness measurement eddy current unit and the output thereof.

The output of sample and hold circuit 70 is conveyed over line 78 to LP (low pass) filter 80 and the output thereof is provided to shifting/scaling amplifiers 82 over line 84. Amplifiers 82 furnish a signal on line 22 which is compatible with display unit 20 input requirements, unit 20 preferably being a digital meter.

As alluded to above, applicants look also to systems wherein a specimen is to be evaluated only for intolerable thickness variation along lengths thereof circularly or helically inspected. Here, applicants provide for output indication or alarm only where such intolerable thickness variation exists along the specimen length (or perimeter). The method for determining variations in the thickness of a specimen to be evaluated along a given length thereof comprising the ensuing steps: applying a DC magnetic field to the specimen of level placing the specimen in a near magnetically saturated state at successive circular locations along the length; concurrently inducing eddy currents in a surface of the specimen successively at the plural locations; detecting resulting eddy currents so induced in the surface of the specimen at the plural locations; and deriving from variations as between successively detected eddy currents indication of variation in specimen thickness. In a further step, applicants provide output indication selectively of variation of specimen thickness in excess of a predetermined permissible thickness variation.

A system for this purpose is configured as for the absolute thickness measurement with the exception that a threshold comparator is connected between drive and processing circuitry 18 and display unit 20, such that display or alarm is conditioned on the comparator identifying a sensed result as exceeding a preset threshold corresponding to the predetermined permissible thickness variation.

Various changes to the particularly disclosed systems and methods may evidently be introduced without departing from the invention. Accordingly, it is to be appreciated that the particularly discussed and depicted preferred embodiments and practices of the invention are intended in an illustrative and not in a limiting sense. The true spirit and scope of the invention are set forth in the ensuing claims.

## Claims

1. A method for measuring the thickness of a specimen to be evaluated comprising the steps of:
(a) applying a DC magnetic field to the specimen of level placing at least a portion of the specimen in a near magnetically saturated state; and
(b) determining the incremental magnetic permeability of said portion of the specimen and deriving therefrom the thickness of said portion of the specimen.

2. The method as claimed in claim 1 wherein said step (b) is practiced in part by inducing eddy currents in a surface of said specimen bounding said portion.

3. The method as claimed in claim 2 wherein said step (b) is practiced in further part by detecting eddy currents in said surface.

4. A method for measuring the thickness of a specimen to be evaluated comprising the steps of:
(a) applying a DC magnetic field to the specimen of level placing the specimen in a near magnetically saturated state;
(b) inducing eddy currents in a surface of the specimen within the magnetic field;
(c) detecting variations in eddy currents related to specimen permeability so induced in said surface of the specimen; and
(d) deriving from the detected eddy current variations related to permeability a thickness of said specimen at said surface.

5. The method as claimed in claim 1 or 4 including the further step of displaying said derived thickness.

6. A method for determining variations in the thickness of a specimen to be evaluated at given points in a circular or helical path along a length thereof comprising the steps of:
(a) applying a DC magnetic field to the specimen of level placing the specimen in a near magnetically saturated state at successive circular or helical locations in said length;
(b) inducing eddy currents in a surface of the specimen successively at said plural locations concurrently with practices of said step (a);
(c) detecting eddy currents so induced in the surface of the specimen at said plural locations; and
(d) deriving from variations as between successively detected eddy currents in step (c) indication of variation in specimen thickness.

7. The method as claimed in claim 6 including the further step of providing output indication selectively of variation of specimen thickness in excess of a predetermined permissible thickness variation.

8. The method as claimed in claim 1, 4 or 6 wherein the DC magnetic field used in step (a) is obtained from ancillary apparatus for evaluating said specimen other than for thickness measurement.

9. The method as claimed in claim 8 wherein said ancillary apparatus is a flux leakage type evaluating apparatus.

10. A system for measuring the thickness of a specimen to be evaluated comprising:
(a) first means for applying a DC magnetic field to the specimen of level placing at least a portion of the specimen in a near magnetically saturated state; and
(b) second means for determining the surface magnetic permeability of said portion of the specimen and deriving therefrom the thickness of said portion of the specimen.

11. The system as claimed in claim 10 wherein said second means comprises in part means for inducing eddy currents in a surface of said specimen bounding said portion and for detecting eddy currents in said surface.

12. The system as claimed in claim 10 further including means for displaying said derived thickness.

13. A system for measuring the thickness of a specimen to be evaluated comprising the steps of:
(a) first means for applying a DC magnetic field to the specimen of level placing the specimen in a near magnetically saturated state;
(b) second means for inducing eddy currents in a surface of the specimen within the magnetic field and for detecting variations in eddy currents so induced in the surface of the specimen; and
(c) third means for deriving from the detected eddy current variations a thickness of said specimen at said surface.

14. The system as claimed in claim 11 or 13 wherein said second means includes a pair of differentially connected coils.

15. The system as claimed in claim 10 or 13 wherein said first means is a component of ancillary apparatus for evaluating said specimen other than for thickness measurement.

16. The system as claimed in claim 15 wherein said ancillary apparatus is a flux leakage type evaluating apparatus.

17. The system as claimed in claim 16 wherein said first means comprises a yoke magnet of said flux leakage type evaluating apparatus having legs mutually spaced and with ends thereof juxtaposed with said specimen and a coil disposed about a central course of said yoke magnet between said legs thereof.

18. The system as claimed in claim 17 further including a flux leakage probe disposed interiorly of said legs of said yoke magnet.

19. The system as claimed in claim 18 wherein said second means is disposed circumferentially of said flux leakage probe.

20. The system as claimed in claim 19 wherein said second means includes a pair of differentially connected coils.
